# EUROPÄISCHE PATENTSCHRIFT

(11) **EP 0 877 896 B1**
(45) Veröffentlichungstag und Bekanntmachung des Hinweises auf die Patenterteilung: **07.11.2001**
(21) Anmeldenummer: 97919245.7
(22) Anmeldetag: 06.02.1997
(51) Int. Cl.: F16P 3/16

(54) **SPANNKOPF ZUM SPANNEN VON TEILEN MIT EBENEN ANGRIFFSFLÄCHEN AUF EINER UNTERLAGE SOWIE DRUCKLUFTBETÄTIGTER SICHERHEITSSPANNZYLINDER HIERFÜR**
CLAMPING HEAD FOR THE CLAMPING OF PARTS WITH EVEN WORKING SURFACES ON A SUPPORT AS WELL AS A PNEUMATICALLY OPERATED SAFETY CLAMPING CYLINDER
TETE DE SERRAGE POUR LE SERRAGE DE PIECES AVEC DES SURFACES D'APPLICATION UNIES SUR UN SUPPORT, AINSI QUE VERIN DE SERRAGE DE SURETE A COMMANDE PNEUMATIQUE

(30) Priorität: 07.02.1996 DE 19604414
(43) Veröffentlichungstag der Anmeldung: 18.11.1998
(73) Patentinhaber: Mayer, Klaus, 88636 Illmensee (DE)
(72) Erfinder: Mayer, Klaus, 88636 Illmensee (DE)
(74) Vertreter: Patentanwälte Eisele, Otten, Roth & Dobler
(86) Internationale Anmeldenummer: DE9700218
(87) Internationale Veröffentlichungsnummer: WO9728926

(56) Entgegenhaltungen:
- DE-A- 3 438 185
- FR-A- 2 085 446
- US-A- 4 527 684
- MACHINES PRODUCTION, Bd. 2360, Nr. 127, 8.Dezember 1975, Seite 5 XP002034937 "Pas pressé"

## Beschreibung

Die Erfindung betrifft einen Spannkopf zum Spannen von Teilen mit ebenen Angriffsflächen auf einer Unterlage sowie einen druckluftbetätigten Sicherheitsspannzylinder hierfür.

Bei Spannzylindern ist große Unfallgefahr dadurch gegeben, daß eine Bedienungsperson ihre Hand zwischen Spannteller und zu spannendes Teil bringen kann. Dadurch können bei Betätigung des Spannzylinders erhebliche Handverletzungen auftreten. Deshalb muß an Geräten mit Spannzylindern bisher eine Zweihandbedienung vorgesehen sein, wodurch sicher ausgeschlossen wird, daß die Bedienungsperson eine ihrer Hände in den Arbeitsbereich des Spannzylinders bringt. Der Einbau einer Zweihandbedienung ist aber kostenaufwendig. Die Bedienung eines Spannzylinders über die Zweihandbedienung hat den weiteren Nachteil, daß die Bearbeitungszeit im Verlauf eines Fertigungsprozesses erhöht wird.

Aus der DE-A-34 38 185 ist ein druckmittelbetätigter Spannzylinder mit Sicherheitsabschaltung bekannt geworden. Mit einer solchen Anordnung ist es nicht möglich, eine Sicherheitsabschaltung in den Spannkopf und das Abschalten des Spannzylinders dann zu erzielen, sobald der Spannkopf an eine nicht ebene Fläche berührt.

Aus der Literaturstelle MACHINES PRODUCTION, vol. 2360, No. 127, 8.12.75, Seite 5, Spalte 3 und 4: "Pas pressé" (Nächstliegender Stand der Technik) ist weiterhin ein Spannzylinder bekannt geworden, bei welchem ein Abschalten der Spannbewegung beim Auftreffen des Spannkopfes auf einer nicht ebenen Fläche (z. B. Hand) dargestellt ist. Nähere Angaben zur genaueren technischen Konstruktion sind nicht beschrieben.

Der Erfindung liegt die Aufgabe zugrunde, einen Spannkopf und einen Spannzylinder hierfür der eingangs genannten Gattung zu schaffen, wobei einfacher Aufbau, Betriebssicherheit und Beseitigung einer Unfallgefahr im Vordergrund stehen sollen.

Erfindungsgemäß wird die Aufgabe durch die im Anspruch 1 aufgeführten Merkmale gelöst.

Die Erfindung weist gegenüber dem Bekannten die Vorteile auf, daß der Spannkopf bzw. der Sicherheitsspannzylinder zur Betätigung keine Zweihandbedienung durch die betreffende Bedienungsperson mehr erforderlich machen, weil bei der Bedienungsperson Handverletzungen, auch wenn sie ihre Hand zwischen den Spannkopf und das zu spannende Teil bringt, dennoch ausgeschlossen sind. Betriebssichere Handhabung, einfacher Aufbau und weitgehende Wartungsfreiheit sind weitere Vorteile des Erfindungsgegenstands.

Weitere vorteilhafte Ausgestaltungen der Erfindung gehen aus den Unteransprüchen und der nachfolgenden Beschreibung hervor.

Die Erfindung wird an einem Ausführungsbeispiel anhand einer Zeichnung erläutert, die den neuen Spannkopf und den neuen Sicherheitsspannzylinder, jeweils teilweise im Längsschnitt dargestellt, zeigt.

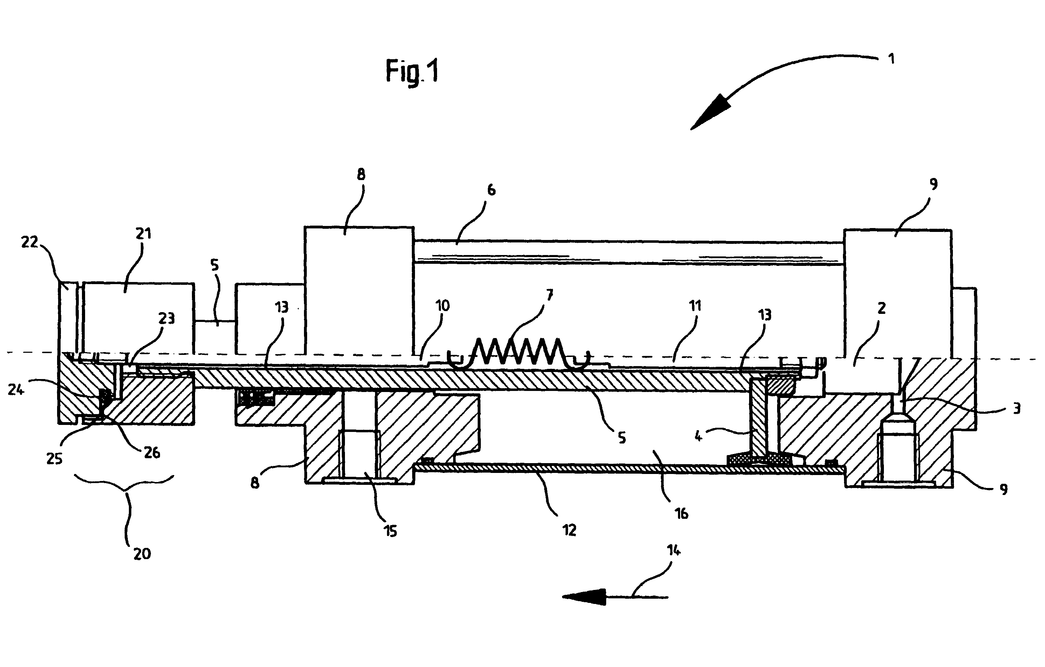

Der Spannkopf 20 ist aus einem Ringteil 21 und einem Spannteller 22 zum Aufsetzen auf das zu spannende (in der Zeichnung nicht dargestellte) Teil gebildet. Der Spannteller 22 ist mittels Federkraft gegen das Ringteil 21 gehalten.

Zu diesem Zweck wird die Federkraft bei einem Ausführungsbeispiel der Erfindung mittels einer oder mehrerer (in der Zeichnung nicht dargestellter) Zugfedern im Spannkopf 20 aufgebracht.

Der Spannkopf 20 kann an jeden beliebigen Spannzylinder angebracht werden.

Aufbau und Funktionsweise des Spannkopfs 20 werden nachfolgend in Verbindung mit einem beispielhaften Sicherheitsspannzylinder 1 beschrieben.

Der Sicherheitsspannzylinder 1 umfaßt zunächst einen Zylinderkopf 8 und einen Zylinderdeckel 9, die mittels eines Zylinderrohrs 12 axial auf Abstand gehalten und mittels einer Zugstange 6 axial zusammengehalten werden. In dem Zylinderrohr 12 läuft ein Kolben 4 zur Betätigung eines Spannkopfs 20, der das betreffende (in der Zeichnung nicht dargestellte) Teil spannen soll. Der Spannkopf 20 dient dem Spannen von Teilen mit ebenen Angriffsflächen auf einer Unterlage. Am Kolben 4 ist eine Kolbenstange 5 angebracht, an deren freiem Ende der Spannkopf 20 sitzt.

Bei diesem Ausführungsbeispiel der Erfindung ist am Spannteller 22 mittig eine Federzugstange 10 angelenkt, an deren freiem Ende eine Zugfeder 7 eingehängt ist. Das freie Ende der Zugfeder 7 ist in eine weitere Federzugstange 11 eingehängt, deren der Zugfeder 7 abgekehrtes Ende im Sicherheitsspannzylinder 1 gehäusefest angelenkt ist.

Für die Druckluft bilden das Ringteil 21 und der Spannteller 22 gemeinsam einen Druckraum 23. Zwischen dem Ringteil 21 und dem Spannteller 22 liegt ein zusammendrückbarer O-Ring 24, der den Druckraum 23 nach außen hin abdichtet. Der Druckraum 23 steht über eine Längsbohrung 13 in der Kolbenstange 5 mit dem Kolbendruckraum 2 für den Kolben 4 druckmäßig in ständiger Verbindung.

Der Kolbendruckraum 2 erhält Druckluft über eine enge, kalibrierte Bohrung 3 von einer (in der Zeichnung nicht dargestellten) Druckluftquelle zur Betätigung des Kolbens 4 und damit des Spannkopfs 20 in Richtung eines Pfeils 14, also zum Spannen eines Teils mit ebenen Angriffsflächen mittels des Spannkopfs 20. Der Druckaufbau erfolgt langsam bis zu einem Druck im Kolbendruckraum 2 von 0,2 bis 0,5 bar. Die enge, kalibrierte Bohrung 3 ist an die wirksame Fläche des Kolbens 4 angepaßt.

Einerseits das Ringteil 21 und andererseits der Spannteller 22 greifen gestuft derart ineinander, daß nach nur geringfügiger Zusammendrückung des zusammendrückbaren O-Rings 24 eine Schulter 25 am Spannteller 22 unmittelbar an einer Anschlagschulter 26 des Ringteils 21 großflächig anschlägt. Dadurch erfolgt die Kraftübertragung vom Kolben 4 über die Kolbenstange 5, das Ringteil 21 und den Spannteller 22 des Spannkopfs 20 unmittelbar auf das auf einer (in der Zeichnung nicht dargestellten) Unterlage aufliegende, zu spannende (in der Zeichnung nicht dargestellte) Teil. Dabei dichtet der O-Ring den Druckraum 23 im Spannkopf 20 nach außen hin ab, solange der Spannkopf 20 gegen ein Teil mit ebener Angriffsfläche gedrückt wird.

Trifft der Spannteller 22 des Spannkopfs 20 dagegen auf ein nicht ebenes Hindernis, beispielsweise die Hand einer Bedienungsperson, so wird der Spannteller 22 gegenüber dem Ringteil 21 kippen, so daß die Auflage der Schulter 25 des Spanntellers 22 auf der Anschlagschulter 26 des Ringteils 21 nur punktweise erfolgt. An anderer Stelle hebt der Spannteller 22 dagegen von dem O-Ring ab, wodurch der Druck im Druckraum 23 des Spannkopfs 20 schlagartig abfällt. Dadurch wird über die Längsbohrung 13 in der Kolbenstange 5 auch der Druck im Kolbendruckraum 2 abgebaut, wodurch der Kolben 4 augenblicklich keinerlei Kraft mehr entwickeln kann und zusammen mit dem Spannkopf 20 stehen bleibt.

Dem Rückhub des Kolbens 4 und damit des Spannkopfs 20 dient eine Bohrung 15 im Sicherheitsspannzylinder 1.

Sollen der Kolben 4 und damit der Spannkopf 20 in ihre Rückhubbewegung entgegen der Richtung des Pfeils 14 übergehen, so wird die Bohrung 3 von ihrer (in der Zeichnung nicht dargestellten) Druckquelle getrennt und nach außen hin geöffnet, und es wird der Bohrung 15 mit großem Querschnitt Druckluft zugeführt, die zur anderen Seite des Kolbens 4 gelangt, nämlich in einen weiteren Druckraum 16. Dadurch werden der Kolben 4 und der Spannkopf 20 entgegen der Richtung des Pfeils 14 bewegt. Gleichzeitig hebt der Spannteller 22 von dem O-Ring 24 ab. Dadurch wird der gestufte Ringschlitz zwischen dem Spannteller 22 und dem Ringteil 21 von eventuellen Verunreinigungen durch Ausblasen befreit.

Wird der Spannkopf 20 an einem anderen Spannzylinder angebracht, bei dem die Zuführung der Druckluft nicht durch die Kolbenstange des Spannzylinders erfolgen kann, dann wird eine separate Pneumatikleitung an den Spannkopf 20 angeschlossen.

## Patentansprüche

1. Spannkopf zum Spannen von Teilen mit ebenen Angriffsflächen auf einer Unterlage, **dadurch gekennzeichnet, daß** der Spannkopf (20) aus einem Ringteil (21) und einem Spannteller (22) zum Aufsetzen auf das zu spannende Teil gebildet ist, der mittels Federkraft unter Zwischenlegung eines zusammendrückbaren O-Rings (24) gegen das Ringteil (21) kippbar gehalten ist, und daß für die Druckluft das Ringteil (21) und der Spannteller (22) gemeinsam einen Druckraum (23) bilden, der fluidmäßig mit einem über eine kalibrierte Bohrung mit Druckluft versorgten Kolbendruckraum eines zum Spannkopf (20) gehörenden Spannzylinders in ständiger Verbindung steht, wobei der Spannteller (22) beim Kippen vom O-Ring (24) abhelt und der Druckraum (23) nach außen hin geöffnet wird, was einen schlagartigen Druckabfall im Druckraum (23) bewirkt.

2. Spannkopf nach Anspruch 1, **dadurch gekennzeichnet, daß** einerseits das Ringteil (21) und andererseits der Spannteller (22) gestuft derart ineinandergreifen, daß nach nur geringfügiger Zusammendrückung des O-Rings (24) eine Schulter (25) am Spannteller (22) unmittelbar auf einer Anschlagschulter (26) des Ringteils (21) großflächig anschlägt.

3. Spannkopf nach einem der Ansprüche 1 oder 2, **dadurch gekennzeichnet, daß** eine oder mehrere Zugfedern zum Andrücken des Spanntellers (22) an das Ringteil (21) im Spannkopf (20) angeordnet ist bzw. sind.

4. Druckluftbetätigter Sicherheitsspannzylinder zum Spannen von Teilen mit ebenen Angriffsflächen auf einer Unterlage mit einem Spannkopf nach Patentanspruch 1 der von einem Kolben vor- und zurückbewegt wird, **dadurch gekennzeichnet, daß** der Spannkopf (20) ein Ringteil (21) und einen Spannteller (22) zum Aufsetzen auf das zu spannende Teil aufweist, der mittels Federkraft unter Zwischenlegung eines zusammendrückbaren O-Rings (24) gegen das Ringteil (21) gehalten ist, und daß für die Druckluft das Ringteil (21) und der Spannteller (22) gemeinsam einen Druckraum (23) bilden, der fluidmäßig mit dem über eine kalibrierte Bohrung mit Druckluft versorgten Kolbendruckraum (2) in ständiger Verbindung steht.

5. Sicherheitsspannzylinder nach Anspruch 4, **dadurch gekennzeichnet, daß** eine Zugfeder (7) zum Andrücken des Spanntellers (22) an das Ringteil (21) außerhalb des Spannkopfs (20) angeordnet ist.

6. Sicherheitsspannzylinder nach einem der Ansprüche 4 oder 5, **dadurch gekennzeichnet, daß** die mit ihrem einen Ende gehäusefest im Sicherheitsspannzylinder (1) angelenkte Zugfeder (7) über eine in der Kolbenstange (5) zur Betätigung des Spannkopfs (20) laufende Zugstange mittig am Spannteller (22) des Spannkopfs (20) eingehängt ist.

7. Sicherheitsspannzylinder nach einem der Ansprüche 4 bis 6, **dadurch gekennzeichnet, daß** der vom Ringteil (21) und vom Spannteller (22) gemeinsam gebildete Druckraum (23) druckmäßig über eine Längsbohrung (13) in der Kolbenstange (5) des Sicherheitsspannzylinders (1) ständig mit dem Kolbendruckraum (2) in Verbindung steht.

## Claims

1. Clamping head for clamping parts with plane working surfaces to a support, **characterised in that** the clamping head (20) is formed from an annular part (21) and a clamping plate (22) for placement onto the part to be clamped, which plate is tiltably held against the annular part (21) by elastic force by insertion of a compressible O-ring (24), and **in that** for the compressed air the annular part (21) and the clamping plate (22) jointly form a compression chamber (23) which chamber is constantly fluidly connected to a piston compression chamber of a clamping cylinder belonging to the clamping head (20) and supplied by a calibrated hole with compressed air, wherein upon tilting, the clamping plate (22) is lifted from the O-ring (24) and the compression chamber (23) is opened toward the outside which causes a sudden drop in pressure in the compression chamber (23).

2. Clamping head according to claim 1, **characterised in that** the annular part (21), on the one hand, and the clamping plate (22) on the other hand mesh with one another in a stepped manner such that after only slight compression of the O-ring (24) a shoulder (25) on the clamping plate (22) directly abuts a large area of a stop shoulder (26) of the annular part (21).

3. Clamping head according to one of claims 1 or 2, **characterised in that** one or more tension springs is/are arranged in the clamping head (20) to press the clamping plate (22) against the annular part (21).

4. Pneumatically-operated safety clamping cylinder for clamping parts with plane working surfaces to a support with a clamping head according to claim 1 which is moved back and forth by a piston, **characterised in that** the clamping head (20) has an annular part (21) and a clamping plate (22) for placement onto the part to be clamped, which plate is held against the annular part (21) by elastic force by insertion of a compressible O-ring (24), and **in that** for the compressed air the annular part (21) and the clamping plate (22) jointly form a compression chamber (23) which is constantly fluidly connected to the piston compression chamber supplied by a calibrated hole with compressed air.

5. Safety clamping cylinder according to claim 4, **characterised in that** a tension spring (7) is arranged outside the clamping head (20) for pressing the clamping plate (22) against the annular part (21).

6. Safety clamping cylinder according to one of claims 4 or 5, **characterised in that** the tension spring (7), coupled by its one end in the safety clamping cylinder (1) so as to be secured to the housing, is suspended centrally on the clamping plate (22) of the clamping head (20) by a connecting rod extending in the piston rod (5) for actuation of the clamping head (20).

7. Safety clamping cylinder according to one of claims 4 to 6, **characterised in that** the compression chamber (23) jointly formed by the annular part (21) and by the clamping plate (22) is constantly connected to the piston compression chamber (2) in pressure terms by a slot (13) in the piston rod (5) of the safety clamping cylinder (1).

## Revendications

1. Tête de serrage pour serrer des pièces ayant des surfaces d'engagement planes sur une embase,
**caractérisée en ce que** la tête de serrage (20) est formée d'une partie annulaire (21) et d'un disque de serrage (22) pour la mise en place sur la pièce à serrer, qui est maintenue en pouvant basculer contre la pièce annulaire (21) au moyen d'une force élastique par interposition d'un joint torique compressible (24), et **en ce que** la pièce annulaire (21) et le disque de serrage (22) forment, en commun, un espace de pression (23) pour l'air comprimé, qui est en liaison constante, d'un point de vue fluidique, avec un espace de pression de piston, alimenté en air comprimé par l'intermédiaire d'un perçage calibré, d'un vérin de serrage appartenant à la tête de serrage (20), le disque de serrage (22), lors du basculement, étant soulevé du joint torique (24) et l'espace de pression (23) étant ouvert vers l'extérieur, ce qui permet une brusque chute de pression dans l'espace de pression (23).

2. Tête de serrage selon la revendication 1,
**caractérisée en ce que**, d'une part, la partie annulaire (21) et, d'autre part, le disque de serrage (22) sont engagés l'un dans l'autre de façon étagée de sorte que, après seulement une légère compression du joint torique (24), un épaulement (25) sur le disque de serrage (22) vient en butée, sur une grande surface, directement sur un épaulement de butée (26) de la partie annulaire (21).

3. Tête de serrage selon une des revendications 1 ou 2,
**caractérisée en ce qu'**un ou plusieurs ressorts de traction pour presser le disque de serrage (22) contre la partie annulaire (21) sont agencés dans la tête de serrage (20).

4. Vérin de serrage de sécurité actionné par de l'air comprimé pour serrer des pièces ayant des surfaces d'engagement planes sur une embase, ayant une tête de serrage selon la revendication 1, qui est déplacée vers l'avant et vers l'arrière par un piston,
**caractérisé en ce que** la tête de serrage (20) présente une partie annulaire (21) et un disque de serrage (22) pour la mise en place sur la pièce à serrer, qui est maintenue contre la partie annulaire (21) au moyen d'une force élastique par interposition d'un joint torique compressible (24), et **en ce que** la partie annulaire (21) et le disque de serrage (22) forment, en commun, un espace de pression (23) pour l'air comprimé, qui est toujours en liaison, d'un point de vue fluidique, avec l'espace de pression du piston (2) alimenté en air comprimé par l'intermédiaire d'un perçage calibré.

5. Vérin de serrage de sécurité selon la revendication 4,
**caractérisé en ce qu'**un ressort de traction (7) pour presser le disque de serrage (22) contre la partie annulaire (21) est agencé à l'extérieur de la tête de serrage (20).

6. Vérin de serrage de sécurité selon une des revendications 4 ou 5,
**caractérisé en ce que** le ressort de traction (7) articulé par une de ses extrémités, de façon solidaire du boîtier, dans le vérin de serrage de sécurité (1) est accroché, par l'intermédiaire d'un tirant s'étendant dans la tige de piston (5) pour l'actionnement de la tête de serrage (20), de façon centrale, au disque de serrage (22) de la tête de serrage (20).

7. Vérin de serrage de sécurité selon une des revendications 4 à 6,
**caractérisé en ce que** l'espace de pression (23) formé en commun par la partie annulaire (21) et par le disque de serrage (22), du point de vue de la pression, est toujours en liaison avec l'espace de pression du piston (2) par l'intermédiaire d'un perçage longitudinal (13) dans la tige de piston (5) du vérin de serrage de sécurité (1).
